(19) Europäisches Patentamt
European Patent Office
Office européen des brevets

(11) **EP 4 142 182 A1**

(12) **EUROPEAN PATENT APPLICATION**

(43) Date of publication:
**01.03.2023  Bulletin 2023/09**

(21) Application number: **22191605.9**

(22) Date of filing: **23.08.2022**

(51) International Patent Classification (IPC):
***H04B 7/185*** (2006.01)      ***H04W 56/00*** (2009.01)

(52) Cooperative Patent Classification (CPC):
**H04B 7/18504; H04W 56/0045**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2021  US 202163237423 P**

(71) Applicant: **Nokia Technologies Oy
02610 Espoo (FI)**

(72) Inventors:
• **HSIEH, Tzu-Chung
  Hoffman Estates (US)**
• **CHEN, Jie
  Naperville (US)**
• **YUAN, Shuai
  Naperville (US)**

(74) Representative: **Nokia EPO representatives
Nokia Technologies Oy
Karakaari 7
02610 Espoo (FI)**

(54) **AUTONOMOUS TIMING ADVANCE ADJUSTMENT IN HIGH ALTITUDE PLATFORM STATION COVERAGE**

(57)    Systems, methods, apparatuses, and computer program products for autonomous timing advance adjustment in high altitude platform station coverage. A method may include receiving system information from a network element. The method may also include transmitting a sounding reference signal in response to receiving the system information. The method may further include receiving service link timing advance parameters that the network element determined based on the sounding reference signal. In addition, the method may include entering into an autonomous timing advance mode in response to receiving the service link timing advance parameters. Further, the method may include, while in the autonomous timing advance mode, determining a timing advance value at a given time for uplink transmission based on the service link timing advance parameters and the system information. The method may also include performing uplink data transmission to the network element based on the timing advance value.

FIG. 1

EP 4 142 182 A1

**Description**

FIELD:

Some example embodiments may generally relate to mobile or wireless telecommunication systems, such as Long Term Evolution (LTE) or fifth generation (5G) new radio (NR) access technology, or other communications systems. For example, certain example embodiments may relate to apparatuses, systems, and/or methods for autonomous timing advance adjustment in high altitude platform station coverage.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

SUMMARY:

Some example embodiments may be directed to a method. The method may include receiving system information from a network element. The method may also include transmitting a sounding reference signal in response to receiving the system information. The method may further include receiving service link timing advance parameters that the network element determined based on the sounding reference signal. In addition, the method may include entering into an autonomous timing advance mode in response to receiving the service link timing advance parameters. Further, the method may include, while in the autonomous timing advance mode, determining a timing advance value at a given time for uplink transmission based on the service link timing advance parameters and the system information. The method may also include performing uplink data transmission to the network element based on the timing advance value.
Other example embodiments may be directed to an apparatus. The apparatus may include at least one processor and at least one memory including computer program code. The at least one memory and computer program code may also be configured to, with the at least one processor, cause the apparatus at least to receive system information from a network element. The apparatus may also be caused to transmit a sounding reference signal in response to receiving the system information. The apparatus may further be caused to receive service link timing advance parameters that the network element determined based on the sounding reference signal. In addition, the apparatus may be caused to enter into an autonomous timing advance mode in response to receiving the service link timing advance parameters. Further, the apparatus may be caused to, while in the autonomous timing advance mode, determine a timing advance value at a given time for uplink transmission based on the service link timing advance parameters and the system information. The apparatus may also be caused to perform uplink data transmission to the network element based on the timing advance value.
Other example embodiments may be directed to an apparatus. The apparatus may include means for receiving system information from a network element. The apparatus may also include means for transmitting a sounding reference signal in response to receiving the system information. The apparatus may further include means for service link timing advance parameters that the network element determined based on the sounding reference signal. In addition, the apparatus may include means for entering into an autonomous timing advance mode in response to receiving the service link timing advance parameters. Further, the apparatus may include means for, while in the autonomous timing advance mode, determining a timing advance value at a given time for uplink transmission based on the service link timing advance parameters and the system information. The apparatus may also include means for performing uplink data transmission to the network element based on the timing advance value.
In accordance with other example embodiments, a non-transitory computer readable medium may be encoded with instructions that may, when executed in hardware, perform a method. The method may include receiving system information from a network element. The method may also include transmitting a sounding reference signal in response to receiving the system information. The method may further include receiving service link timing advance parameters that the network element determined based on the sounding reference signal. In addition, the method may include entering into an autonomous timing advance mode in response to receiving the service link timing advance parameters. Further, the method may include, while in the autonomous timing advance mode, determining a timing advance value at a given time for uplink transmission based on the service link timing advance parameters and the system information. The method may also include performing uplink data transmission to the network element based on the timing advance value.

Other example embodiments may be directed to a computer program product that performs a method. The method may include receiving system information from a network element. The method may also include transmitting a sounding reference signal in response to receiving the system information. The method may further include receiving service link timing advance parameters that the network element determined based on the sounding reference signal. In addition, the method may include entering into an autonomous timing advance mode in response to receiving the service link timing advance parameters. Further, the method may include, while in the autonomous timing advance mode, determining a timing advance value at a given time for uplink transmission based on the service link timing advance parameters and the system information. The method may also include performing uplink data transmission to the network element based on the timing advance value.

Other example embodiments may be directed to an apparatus that may include circuitry configured to receive system information from a network element. The apparatus may also include circuitry configured to transmit a sounding reference signal in response to receiving the system information. The apparatus may further include circuitry configured to receive service link timing advance parameters that the network element determined based on the sounding reference signal. In addition, the apparatus may include circuitry configured to enter into an autonomous timing advance mode in response to receiving the service link timing advance parameters. Further, the apparatus may include circuitry configured to, while in the autonomous timing advance mode, determine a timing advance value at a given time for uplink transmission based on the service link timing advance parameters and the system information. The apparatus may also include circuitry configured to perform uplink data transmission to the network element based on the timing advance value.

Certain example embodiments may be directed to a method. The method may include transmitting system information to a user equipment. The method may also include scheduling a sounding reference signal transmission for the user equipment at different instants of time in a flight cycle of a network element. The method may further include receiving a sounding reference signal from the user equipment. In addition, the method may include determining service link timing advance parameters based on the sounding reference signal received at different instants of time in the flight cycle of the network element. Further, the method may include determining a validity of the service link timing advance parameters over a predetermined period of time. The method may also include, based on the validity determination, transmitting the service link timing advance parameters to the user equipment or disabling an autonomous timing advance mode of the user equipment.

Other example embodiments may be directed to an apparatus. The apparatus may include at least one processor and at least one memory including computer program code. The at least one memory and computer program code may be configured to, with the at least one processor, cause the apparatus at least to transmit system information to a user equipment. The apparatus may also be caused to schedule a sounding reference signal transmission for the user equipment at different instants of time in a flight cycle of the apparatus. The apparatus may further be caused receive a sounding reference signal from the user equipment. In addition, the apparatus may be caused to determine service link timing advance parameters based on the sounding reference signal received at different instants of time in the flight cycle of the apparatus. Further, the apparatus may be caused to determine a validity of the service link timing advance parameters over a predetermined period of time. The apparatus may also be caused to, based on the validity determination, transmit the service link timing advance parameters to the user equipment or disabling an autonomous timing advance mode of the user equipment.

Other example embodiments may be directed to an apparatus. The apparatus may include means for transmitting system information to a user equipment. The apparatus may also include means for scheduling a sounding reference signal transmission for the user equipment at different instants of time in a flight cycle of the apparatus. The apparatus may further include means for receiving a sounding reference signal from the user equipment. In addition, the apparatus may include means for determining service link timing advance parameters based on the sounding reference signal received at different instants of time in the flight cycle of the apparatus. Further, the apparatus may include means for determining a validity of the service link timing advance parameters over a predetermined period of time. The apparatus may also include means for, based on the validity determination, transmitting the service link timing advance parameters to the user equipment or disabling an autonomous timing advance mode of the user equipment.

In accordance with other example embodiments, a non-transitory computer readable medium may be encoded with instructions that may, when executed in hardware, perform a method. The method may include transmitting system information to a user equipment. The method may also include scheduling a sounding reference signal transmission for the user equipment at different instants of time in a flight cycle of a network element. The method may further include receiving a sounding reference signal from the user equipment. In addition, the method may include determining service link timing advance parameters based on the sounding reference signal received at different instants of time in the flight cycle of the network element. Further, the method may include determining a validity of the service link timing advance parameters over a predetermined period of time. The method may also include, based on the validity determination, transmitting the service link timing advance parameters to the user equipment or disabling an autonomous timing advance mode of the user equipment.

Other example embodiments may be directed to a computer program product that performs a method. The method may include transmitting system information to a user equipment. The method may also include scheduling a sounding reference signal transmission for the user equipment at different instants of time in a flight cycle of a network element. The method may further include receiving a sounding reference signal from the user equipment. In addition, the method may include determining service link timing advance parameters based on the sounding reference signal received at different instants of time in the flight cycle of the network element. Further, the method may include determining a validity of the service link timing advance parameters over a predetermined period of time. The method may also include, based on the validity determination, transmitting the service link timing advance parameters to the user equipment or disabling an autonomous timing advance mode of the user equipment.

Other example embodiments may be directed to an apparatus that may include circuitry configured to transmit system information to a user equipment. The apparatus may also include circuitry configured to schedule a sounding reference signal transmission for the user equipment at different instants of time in a flight cycle of the apparatus. The apparatus may further include circuitry configured to receive a sounding reference signal from the user equipment. In addition, the apparatus may include circuitry configured to determine service link timing advance parameters based on the sounding reference signal received at different instants of time in the flight cycle of the apparatus. Further, the apparatus may include circuitry configured to determine a validity of the service link timing advance parameters over a predetermined period of time. The apparatus may also include circuitry configured to, based on the validity determination, transmit the service link timing advance parameters to the user equipment or disabling an autonomous timing advance mode of the user equipment.

BRIEF DESCRIPTION OF THE DRAWINGS:

For proper understanding of example embodiments, reference should be made to the accompanying drawings, wherein:

FIG. 1 an example high altitude platform station (HAPS) scenario.
FIG. 2 illustrates an example HAPS service link timing advance (TA) change over time.
FIG. 3 illustrates an example of HAPS and user equipment (UE) positions in the xy plane on the ground, according to certain example embodiments.
FIG. 4 illustrates an example of TA parameterization, according to certain example embodiments.
FIG. 5 illustrates an example signal diagram of an autonomous TA adjustment procedure, according to certain example embodiments.
FIG. 6 illustrates an example flow diagram of a gNB process for autonomous TA adjustment, according to certain example embodiments.
FIG. 7 illustrates an example flow diagram of a UE process for autonomous TA adjustment, according to certain example embodiments.
FIG. 8 illustrates an example flow diagram of a method, according to certain example embodiments.
FIG. 9 illustrates an example flow diagram of another method, according to certain example embodiments.
FIG. 10(a) illustrates an apparatus, according to certain example embodiments.
FIG. 10(b) illustrates another apparatus, according to certain example embodiments.

DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for power saving for autonomous timing advance adjustment in high altitude platform station coverage.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments.

High altitude platform station (HAPS) is a communication node deployed in the stratosphere at an altitude of 18-24 km to provide coverage area on the ground. The aerial platform for HAPS may be a balloon or an unmanned aircraft with navigation capability and a communication link to the ground station for command and control. The latest technological advances in aeronautics, solar energy, and battery efficiency enable HAPS to stay operational in the stratosphere for several months at a stretch. Compared to other communication systems such as satellite and mobile networks, HAPS has the advantage of lower implementation and deployment costs for the same coverage area. HAPS can also be used to provide mobile broadband service, massive Internet of Things (IoT) connectivity, terrestrial network backhauling, as well as communication for maritime and airline industries, public safety, and disaster relief. With the arrival of 5G mobile communication, HAPS may be considered as an alternative platform for 5G new radio (NR) base stations.

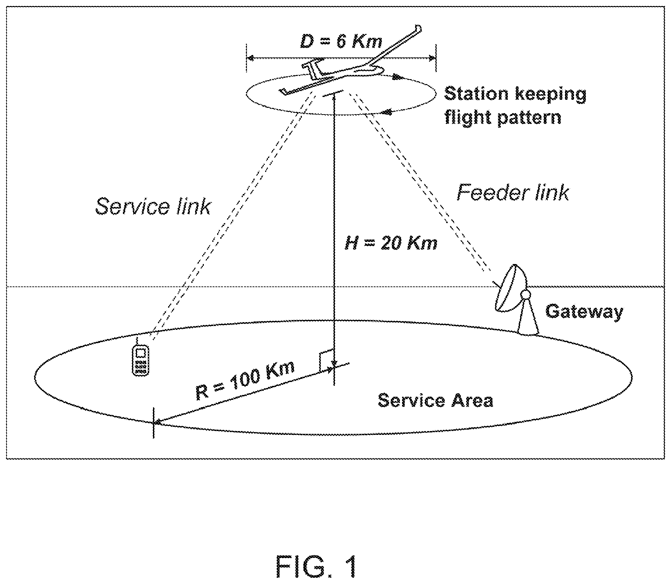

For unmanned aerial vehicle-based (UAV-based) HAPS, the aircraft can fly above the center of the service area in a pre-determined flight pattern as a way to maintain its position for the intended area, known as "station keeping." Normally this pattern is a small circle relative to the service area (e.g., 3 km radius in a 100 km radius coverage area), as illustrated in FIG. 1. In particular, FIG. 1 illustrates a HAPS scenario**Error! Reference source not found..** As illustrated in FIG. 1, services may be provided to UEs via the "service link" over the 4G LTE or 5G NR air interface, while the "feeder link" between HAPS and a ground gateway station provides the backhaul for the aggregated traffic. The 4G or 5G base station functionality can be fully or partially implemented on HAPS (in the so-called "regenerative" architecture) so that the physical layer (PHY) and medium access control (MAC) layer function (e.g., data encoding/decoding and packet scheduling, may be performed onboard HAPS). Alternatively, HAPS can be implemented as a repeater, performing only power amplification and frequency conversion, leaving the processing of LTE/NR signal to a ground-based base station co-located with the gateway (in the "transparent" or "bent-pipe" architecture).

In uplink (UL) transmission, the UE may transmit data with a timing advance (TA) relative to the downlink (DL) system timing in order for the UL signals from different UEs to arrive at the gNB approximately the same time, and their waveforms remain orthogonal. A UE's TA may compensate the signal's round-trip delay between the UE and gNB, and may be adjusted by the gNB with TA commands based on measurements of the UE's UL timing error.

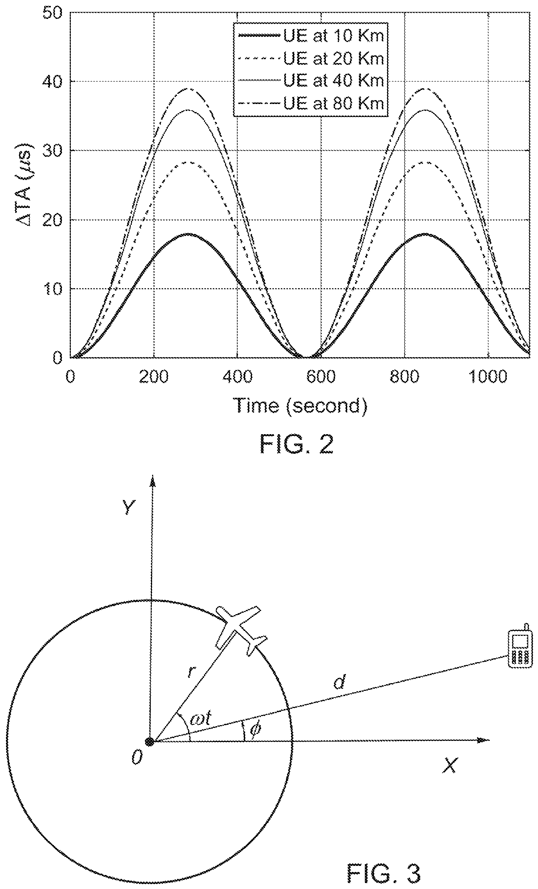

In a HAPS operating scenario, the distance between HAPS and the UE, and the distance between HAPS and the gateway (GW) are both varying over time due to the station keeping flight. A UE's TA that accounts for signal round-trip time (RTT) between the HAPS and the UE can have a large variation. FIG. 2 illustrates an example HAPS service link TA change over time, and FIG. 2 only considers the TA as the RTT between HAPS and the UE. If the HAPS is transparent (i.e., the gNB is located on the ground), then the TA also includes the RTT between HAPS and GW, which will be another periodical function of time with the same period. In particular, FIG. 2 illustrates the TA variation of a stationary UE located at different distances from the center of coverage of a regenerative HAPS, assuming the HAPS is flying at a speed of 120 km/hr in a 3 km radius circle flight path. It can be observed that the TA change ($\Delta TA$) varies in patterns of cycles. One cycle corresponds to HAPS completing one circle on its flight path in a period of 565.5 seconds. In addition, the extent of TA variation in FIG. 2 approaches 40 $\mu$s when the UE is far away from the coverage center. In comparison, the cyclic prefix (CP) length of orthogonal frequency division multiplexing (OFDM) waveform with 15 KHz SCS is about 4.7 $\mu$s. In this case, many TA commands will be needed during a HAPS flight cycle to keep the UL transmission timing error within the CP length for the data to be successfully received and not to generate interference in other UL resources.

According to certain example embodiments, a HAPS flight path for station keeping as well as its flight speed may be known to the network. The angular speed of the HAPS with respect to its coverage center may be calculated. In particular, the angular speed may determine how rapid a UE's TA will change together with the UE's distance from the coverage center. Without knowing the UE's location, the gNB may measure the UE's TA a number of times when the HAPS is at different locations in its flight path, and may determine the parameters of future TA for UL transmission without the gNB continuously sending TA commands.

As discussed herein, certain example embodiments may involve parameterization of the TA between HAPS and another device/node with a linear combination of sine and cosine functions of frequency $\omega$, where $\omega$ is the HAPS flight angular speed calculated from flight speed $v$ and flight path radius $r$ by $\omega = v/r$. In this case, TA at a given time $t$ can be estimated by $TA(t) = a_0 + a_1 \cos(\omega t) + b_1 \sin(\omega t)$, or equivalently $TA(t) = a_0 + A_1 \cos(\omega t + \Phi_1)$.

In other example embodiments, the network (gNB) may signal to the UE a set of system information for TA calculation including (1) HAPS angular speed $\omega$, (2) time reference point, which may be the system slot number for $t = 0$, and (3) parameters for feeder link TA calculation, $\{c_0, c_1\}$. At time $t$, the feeder link TA is calculated $TA_{FL}(t) = c_0 + c_1 \cos(\omega t)$. The time reference point enables the UE to associate the time in the function with the current system slot.

According to certain example embodiments, the network may also schedule the UE's sounding reference signal (SRS) transmissions at different times when HAS is at different locations on the flight path. According to some example embodiments, at least three SRS transmissions may be needed to determine the parameters for future TA calculation. According to other example embodiments, more SRS may be scheduled to validate the UE's stationarity.

In certain example embodiments, the UE may transmit SRS applying the feeder link TA using parameters signaled from the network in the set of system information, as described above, to compensate the delay in the feeder link. Since the feeder link RTT is compensated in the SRS, its timing error may come from the RTT of the service link (i.e., between HAPS and the UE).

According to certain example embodiments, the network may determine the UE's service link TA calculation parameters $\{a_0, a_1, b_1\}$ from SRS timing measurements. The parameters may include coefficients of sine and cosine functions with angular speed $\omega$ for TA calculation. In certain example embodiments, the service link TA, which is user-specific, can be approximated by $TA_{SL}(t) = a_0 + a_1 \cos(\omega t) + b_1 \sin(\omega t)$. In addition, the network may determine if the parameters are valid (or if the UE is nearly stationary) with more than three measurements.

In certain example embodiments, once obtained, the TA parameters $\{a_0, a_1, b_1\}$ may be signaled from the network to the UE, and the UE can autonomously calculate TA at any given time for UL transmission with $TA(t) = TA_{FL}(t) + TA_{SL}(t)$. The network may also monitor the UE's timing accuracy from its UL signal. If a timing error exceeds a limit, the network may schedule SRS transmissions, and re-determine TA parameters for that UE.

According to certain example embodiments, when in autonomous TA mode, the UE may use an UL inactivity timer to ensure the validity of TA parameters. For instance, the timer may start at the end of the UL transmission. After a period of inactivity in UL, the timer will expire, triggering the UE to send a scheduling request for SRS transmissions, and the network may re-determine TA parameters for the UE. If Preconfigured Uplink Resources (PUR) is configured in the HAPS coverage for IoT/machine type communication (MTC) devices, the UL inactivity timer may be used as a TA validation before the UE is allowed to transmit on the preconfigured resource after wake-up from the RRC idle state.

Certain example embodiments are based on an accurate approximation of the signal RTT between the HAPS and UE, and between the HAPS and GW. With the HAPS continuously conducting a circular station keeping flight, the RTT in the service link and in the feeder link are periodical functions of time. Using the known flying speed and flight radius, it may be possible to approximate the RTT with a small number of parameters, which depend on the location of the UE or GW. As described herein, certain example embodiments relate to how the RTT or TA can be parameterized, followed by the procedure to determine the parameters and the procedure to apply these parameters for TA adjustment automation at UE.

*Parameterization of TA*

Certain example embodiments may involve the parameterization of the TA. For instance, a HAPS may be moving at speed $v$ on a circular flight path of radius $r$ at a constant height $h$ above a UE. The angular speed of HAPS (i.e., the change rate of HAPS azimuth angle on the flight path) in this example is $\omega = v/r$. FIG. 3 illustrates an example of HAPS and UE positions in the xy plane on the ground, according to certain example embodiments. In particular, FIG. 3 illustrates the HAPS location at a time $t$. The HAPS' azimuth angle with respect to the coverage center O is $\omega t$ and its coordinates in the xy plane are $\{r \cos(\omega t), r \sin(\omega t)\}$. If a UE is located at a distance $d$ from O with azimuth angle $\phi$, the UE's coordinates in the xy plane are $\{d \cos \phi, d \sin \phi\}$.

According to certain example embodiments, the required TA for the service link (HAPS-to-UE) may be the RTT of the HAPS-UE distance travelled at the speed of light as shown in equation (1):

$$TA(t) = \left(\frac{2}{c}\right)\sqrt{(r\cos(\omega t) - d\cos\phi)^2 + (r\sin(\omega t) - d\sin\phi)^2 + h^2} \quad (1)$$

This is a periodical function with period $T = 2\pi/\omega$, which is the required time period for the HAPS to complete one cycle of the flight path. Theoretically, such a periodical function can be expressed in Fourier series with sine and cosine functions of frequencies $n\omega$, where $n \in \{1, 2, \cdots, N\}$, for example,

$$TA(t) = a_0 + \sum_{n=1}^{N} (a_n \cos(n\omega t) + b_n \sin(n\omega t)), \quad (2)$$

where N is a positive integer. The coefficients can be computed as follows

$$a_0 = \frac{1}{T}\int_0^T TA(t)\, dt, \quad (3)$$

$$a_n = \frac{2}{T} \int_0^T TA(t) \cos(n\omega t) \, dt, \qquad (4)$$

$$b_n = \frac{2}{T} \int_0^T TA(t) \sin(n\omega t) \, dt. \qquad (5)$$

According to certain example embodiments, three coefficients may be used to approximate the service link TA (i.e., the RTT between HAPS and UE):

$$TA_{SL}(t) \approx a_0 + a_1 \cos(\omega t) + b_1 \sin(\omega t), \qquad (6)$$

which is mathematically equivalent to

$$TA_{SL}(t) \approx a_0 + A_1 \cos(\omega t + \Phi_1). \qquad (7)$$

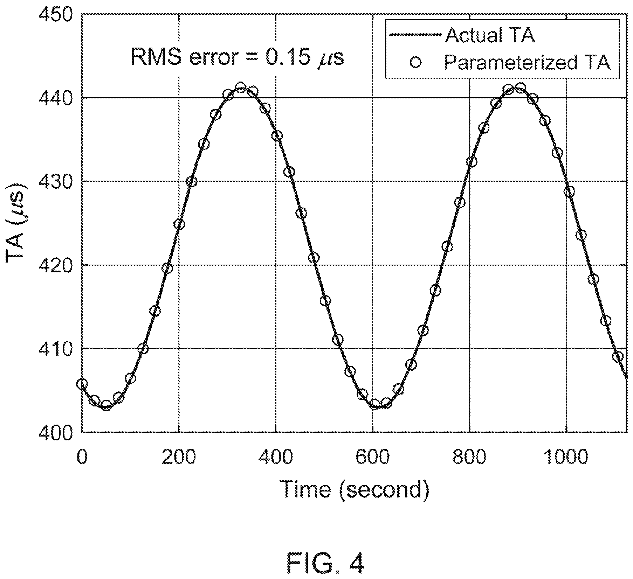

Either by equation (6) or (7), the service link TA as a function of time may utilize three independent coefficients, namely, $\{a_0, a_1, b_1\}$ or $\{a_0, A_1, \Phi_1\}$. To validate the TA parameterization of equation (6) or (7), a typical HAPS scenario of **Error! Reference source not found.** and a UE located at 60 km from the center of coverage in the direction of azimuth angle 30°, may be considered. The three coefficients $\{a_0, a_1, b_1\}$ for the UE's service link TA are listed in **Error! Reference source not found.**. FIG. 4 illustrates an example of TA parameterization, according to certain example embodiments. In particular, FIG. 4 illustrates how the approximation of equation (6) matches the actual TA in this case. For instance, the root-mean-square error of this approximation is about 0.15 $\mu$s, which is a negligible error compared to the 4.7 $\mu$s CP length for the 15 KHz SCS OFDM waveform.

**Table 1: HAPS flight pattern parameters**

| | |
|---|---|
| HAPS flight speed $v$ | 120 km/hr |
| HAPS flight radius $r$ | 3 km |
| HAPS flight altitude $h$ | 20 km |
| HAPS flight angular speed $\omega = v/r$ | 0.0111 s$^{-1}$ |
| HAPS flight cycle period $T = 2\pi/\omega$ | 565.5 s |

**Table 2: UE's TA parameters**

| UE location relative to coverage center | |
|---|---|
| distance $d$ | 60 km |
| azimuth angle $\phi$ | 30$^0$ |
| Service link TA parameters | |
| $a_0$ | 422.18 $\mu$s |
| $a_1$ | -16.44 $\mu$s |
| $b_1$ | -9.49 $\mu$s |
| $A_1$ | -18.98 $\mu$s |
| $\Phi_1$ | -30$^0$ |

In certain example embodiments, the UE's location may not be known by the gNB. Thus, the coefficients $\{a_0, a_1, b_1\}$ in equation (6) or $\{a_0, A_1, \Phi_1\}$ in equation (7) are unknown variables. To determine their values, the gNB can measure the UE's TA from its UL signals at least three times at three different instants in the same flight cycle, and solve the linear equations for the three unknowns.

If the gNB is located at the gateway and the HAPS is used as a repeater (in a transparent architecture), the feeder link TA, i.e., the signal's RRT between the GW and HAPS, may need to be accounted for as well in an UL timing adjustment. In this case, the coefficients for the feeder link TA can be pre-calculated using the GW location. Furthermore, certain example embodiments may select the xy coordinates orientation such that the GW is located on the x-axis. Under that condition, $b_1 = 0$ in (6) and $\Phi_1 = 0$ in equation (7), the three unknowns can be reduced to two, and equations (6) and (7) may become identical with $a_1 = A_1$. In so doing, signaling overhead for the feeder link TA parameters may therefore be reduced. To differentiate from the service link TA, we will denote the two parameters as $\{c_0, c_1\}$ in the feeder link TA function:

$$TA_{FL}(t) \approx c_0 + c_1 \cos(\omega t). \qquad (8)$$

*Determination of TA parameters*

Certain example embodiments may provide a method for the HAPS network to determine the service link TA parameters for a UE whose location is unknown to the network. For instance, the network or gNB may send the required system information for TA calculation to the UE. This may be done in either system-wide SIB broadcast or user-specific RRC configuration signaling. The required information may include, for example, HAPS flight angular speed $\omega$. The information may also include the time reference point for TA function $TA(t)$, i.e., when is the system time that corresponds to $t = 0$ in the TA function. This may be an indication of a particular slot in the system's DL time frame. In addition, the time information may include the parameters $\{c_0, c_1\}$ to be used for the feeder link TA calculation, $TA_{FL}(t) = c_0 + c_1 \cos(\omega t)$.

According to certain example embodiments, for the HAPS network to determine the service link TA parameters, the gNB may also schedule a number of SRS transmissions (e.g., at least three) for the UE at different instants of time in a flight cycle. This can be either initiated by the network or triggered by the UE's scheduling request. In certain example embodiments, when the UE transmits SRS, the UE may apply the timing offset of the feeder link TA calculated using the above received system information. With the feeder link part of delay compensated by the UE, the timing error of the SRS may come from the service link (delay between HAPS and UE). In some example embodiments, three TA measurements at the gNB from the SRS may be used to determine the three unknown TA parameters for the service link. In other example embodiments, the gNB may schedule more than three SRS to validate the stability of the parameters. However, if an SRS scheduling request is originated from the UE, the UE may have determined that it is stationary and is able to enter an autonomous mode for TA adjustment. In that case, the gNB may schedule three SRS transmissions.

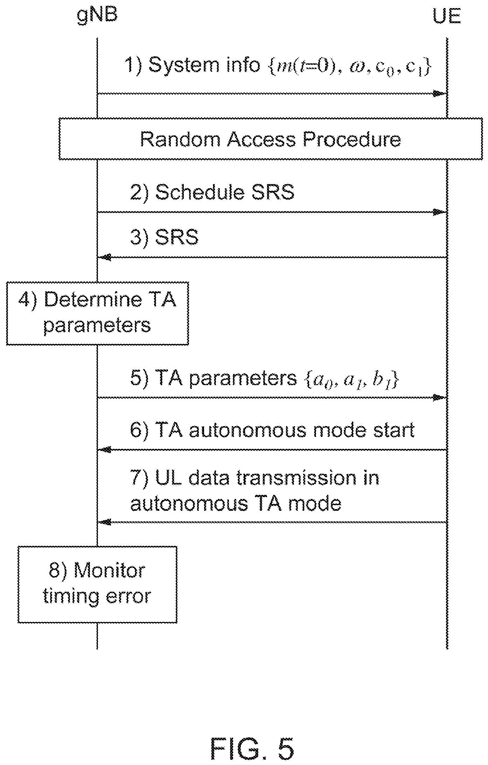

According to certain example embodiments, for the HAPS network to determine the service link TA parameters, the gNB may further measure TA at different instants of time from the SRS signals. The measured TA may be the RTT in the service link since the UE has compensated feeder link TA for the SRS. The service link TA function in equation (6) or (7) has three unknowns, either $\{a_0, a_1, b_1\}$ or $\{a_0, A_1, \Phi_1\}$. These unknowns may be solved from three linear equations with three measured TAs at different times. In some example embodiments, the service link TA parameters may depend on the UE's location. If the UE is moving at high speed, the parameters may evolve too rapidly and the autonomous TA adjustment should be avoided. In certain example embodiments, when the network is unsure about the UE's stationarity, the gNB may schedule more SRS transmissions, and use the additional TA measurements to test the validity of service link TA parameters determined from earlier measurements, and allow the UE to enter the autonomous mode when a set of parameters is found valid over a period of time. The above-described procedures for service link TA parameter determination is illustrated in operations 1-4 of FIG. 5.

*Autonomous TA adjustment*

In certain example embodiments, once the gNB makes sure the service link TA parameters are stable, it may send the parameters to the UE and indicate that the autonomous TA adjustment can be used. The UE, after receiving the parameters, may send back to the gNB an indication of starting the autonomous mode and begin to estimate TA using the received parameters for UL transmission. According to certain example embodiments, the UE may estimate both the feeder link TA as in equation (8), and the service link TA as in either equation (6) or (7) at the time of UL transmission, and use the sum of the two terms to adjust transmission timing offset. In other words, the TA to be used in the autonomous mode by the UE at time $t$ may be represented by equation (9):

$$TA(t) = TA_{FL}(\omega t) + TA_{SL}(\omega t). \qquad\qquad (9)$$

As shown in equation (9), the time $t$ may be based on the DL system time (e.g., frame and slot number according to synchronization signal) with the reference point for t = 0 from the signaled system information. In some example embodiments, the gNB may continue to monitor UL timing error even after the UE is operating in the autonomous mode, but the measurement of timing error can be done less frequently. In case the UE has moved some distance away from its original location, the gNB may detect an increase in UL timing error. When the timing error exceeds a pre-configured limit, the gNB may schedule SRS transmissions for the UE and re-determine the service link TA parameters. The procedure of activating and maintaining the autonomous TA adjustment mode is illustrated in operations 5-8 of FIG. 5.

FIG. 5 illustrates an example signal diagram of an autonomous TA adjustment procedure, according to certain example embodiments. At step 1, the gNB may send system information to the UE, which may include $\{m(t = 0), \omega, c_0, c_1\}$. Following the transmission of the system information, a random access procedure may be performed between the gNB and the UE. At step 2, the gNB may schedule a number of SRS transmission for the UE at different instants of time in a flight cycle. As noted above, the number of SRS transmissions may include at least three, in certain example embodiments. In response to receiving the SRS transmission from the gNB, the UE may at step 3, transmit SRS to the gNB. According to certain example embodiments, when the UE transmits the SRS, it may apply the timing offset of the feeder link TA calculated using the received system information. At step 4, the gNB may determine the service link TA parameters from the SRS signals received at different instants of time. As noted above, in certain example embodiments, the measured TA may be the RTT in the service link since the UE has compensated feeder link TA for the SRS.

At step 5, once the gNB makes sure that the service link TA parameters are stable, the gNB may transmit the service link TA parameters (e.g., $\{a_0, a_1, b_1\}$) to the UE, and indicate that the autonomous TA adjustment can be used. At step 6, after receiving the parameters, the UE may send back to the gNB an indication of starting the autonomous mode, and at step 7, begin to estimate TA using the received parameters for UL transmission. As noted above, the UE may estimate both the feeder link TA as in equation (8), and the service link TA as in either equation (6) or (7) at the time of UL transmission, and use the sum of the two terms to adjust transmission timing offset. At step 8, the gNB may continue to monitor UL timing error even after the UE is operating in the autonomous mode, but the measurement of timing error may be done less frequently.

According to certain example embodiments, when the UE is in the autonomous mode, a timer may be implemented to guard against a prolonged period of UL inactivity that prevents the gNB to keep the TA parameters up to date. The timer may start when the UE enters the autonomous mode, and may be reset whenever the UE transmits a UL signal. When the timer expires, the UE may send a scheduling request for an SRS transmission for the gNB to check if the TA parameters are still valid. If the gNB observes the timing error exceeds the limit, it can schedule a new round of SRS transmissions to re-determine the parameters for the UE.

Certain example embodiments may also be applicable to narrow band IoT (NB-IoT) and MTC devices configured with PUR. According to certain example embodiments, a device or UE may perform the autonomous TA procedure with the gNB before entering a period of discontinuous reception (DRX). When the device wakes up to transmit data on the pre-configured resource, it may use the previously received TA parameters to estimate the TA for UL transmission as long as the UL inactivity timer has not expired. Without the autonomous TA estimation and adjustment, PUR would be impossible for devices in HAPS coverage without going through a random access procedure to acquire TA for UL transmission.

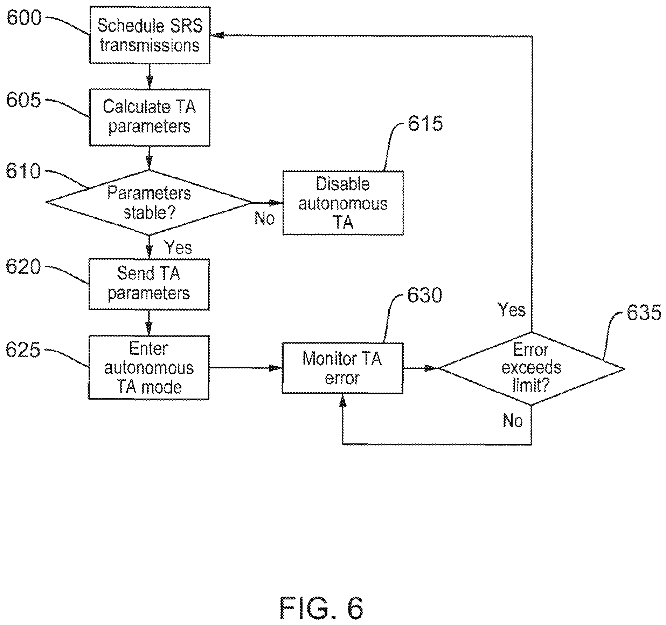

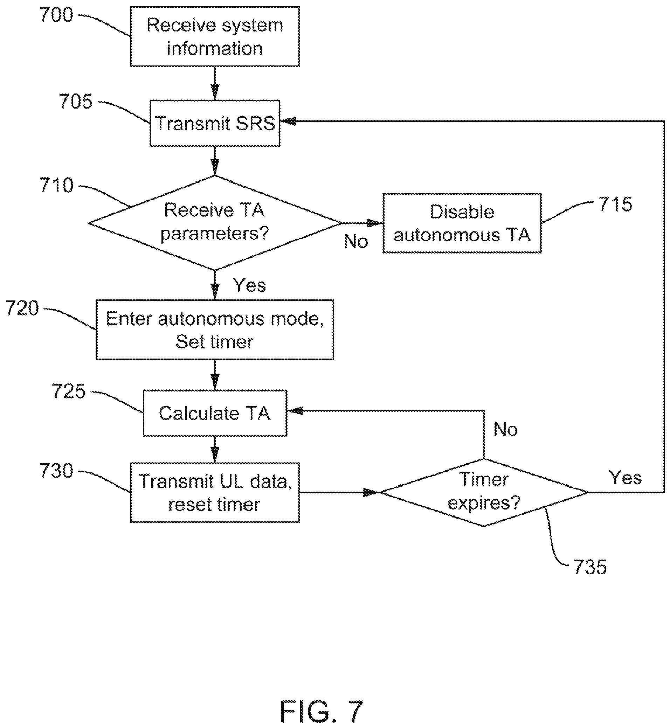

In certain example embodiments, process of autonomous TA adjustment at the gNB and UE is illustrated in FIG. 6 and FIG. 7, respectively. In particular, FIG. 6 illustrates an example flow diagram of a gNB process for autonomous TA adjustment, according to certain example embodiments. At 600, the gNB process may include scheduling SRS transmissions. As previously described, the number of SRS transmissions may include at least three for the UE at different instants of time in a flight cycle. At 605 the gNB may calculate the service link TA parameters from SRS signals received at different instants of time from the UE. At 610, the gNB may determine whether the service link TA parameters are stable and consistent with the UE's stationarity. As described above, in certain example embodiments, the gNB may schedule additional SRS transmissions and use the additional TA measurements to test the validity of service link TA parameters determined from earlier measurements, and only allow the UE to enter the autonomous mode when a set of parameters is found valid over a period of time. If the service link TA parameters are determined to be invalid, then at 615, the gNB may disable autonomous TA (i.e., not allow the UE to enter the autonomous mode). However, at 620, if the service link TA parameters are determined to be valid, the gNB may send the parameters to the UE, and at 625, indicate that the autonomous TA adjustment can be used. According to certain example embodiments, at 625, the gNB may enter the autonomous mode operation for the UE. For instance, both the gNB and the UE may be in sync regarding autonomous mode or normal mode of operation for TA adjustment. In some example embodiments, while in the autonomous mode, the gNB may not send TA commands to the UE, and instead only monitor timing error infrequently. At 630, the gNB may monitor the UL timing error even after the UE is operating in the autonomous mode, and at 635, determine whether the timing error exceeds a pre-configured limit. If the timing error exceeds the pre-configured limit, the procedure returns to 600, where the gNB schedules SRS transmissions for the UE and re-determine the service link TA parameters. If the timing error does not exceed the pre-configured limit, the procedure returns to 630, where the gNB continues to monitor UL timing error.

FIG. 7 illustrates an example flow diagram of a UE process for autonomous TA adjustment, according to certain example embodiments. At 700, the UE may receive the system information transmitted from the gNB. In response to receiving the system information, the UE may at 705, transmit SRS signals to the gNB. According to certain example embodiments, when transmitting the SRS signals to the gNB, the UE may also apply the timing offset of the feeder link TA calculated using the received system information. At 710, the UE may determine whether the service link TA parameters have been received from the gNB. If no, the UE may at 715, disable the autonomous TA mode. If yes, the UE may at 720, enter the autonomous mode, and set a timer to guard against a prolonged period of UL inactivity that prevents the gNB to keep the TA parameters up to date. At 725, the UE may calculate the TA using the received TA parameters for UL transmission. According to certain example embodiments, the UE may estimate both the feeder link TA as in equation (8), and the service link TA as in either equation (6) or (7) at the time of UL transmission, and use the sum of the two terms to adjust transmission timing offset. At 730, the UE may transmit the UL data to the gNB and reset the timer that is implemented to guard against a prolonged period of UL inactivity. At 735, if the timer has not expired, the procedure may return to 725 to calculate the TA. However, if at 735 the timer has expired, the procedure may return to 705 to transmit the SRS signal to the gNB.

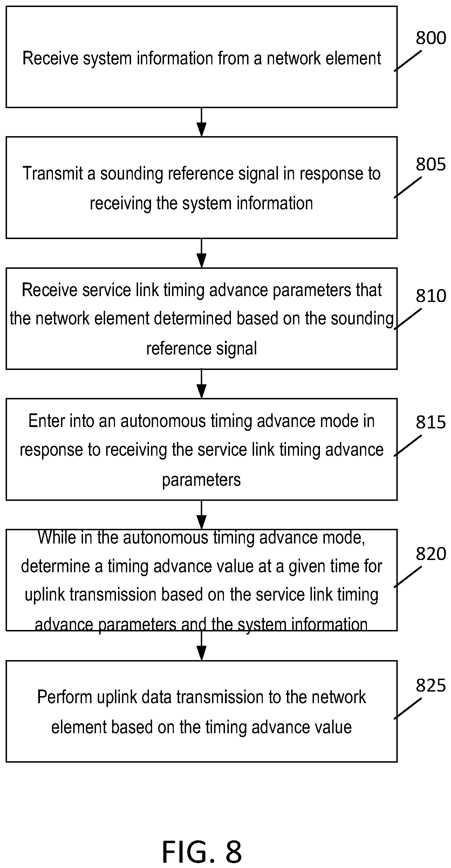

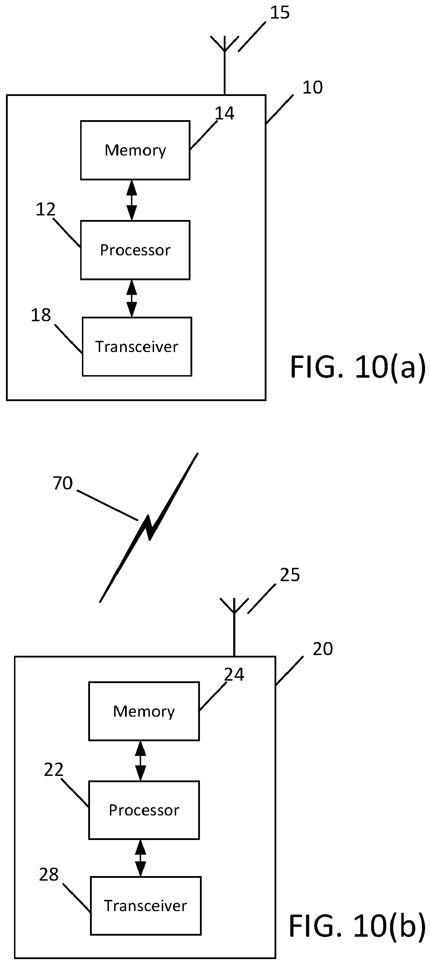

FIG. 8 illustrates an example flow diagram of a method, according to certain example embodiments. In an example embodiment, the method of FIG. 8 may be performed by a network entity, or a group of multiple network elements in a 3GPP system, such as LTE or 5G-NR. For instance, in an example embodiment, the method of FIG. 8 may be performed by a UE similar to one of apparatuses 10 or 20 illustrated in FIGs. 10(a) and 10(b).

According to certain example embodiments, the method of FIG. 8 may include, at 800, receiving system information from a network element. At 805, the method may include transmitting a sounding reference signal in response to receiving the system information. At 810, the method may include receiving service link timing advance parameters that the network element determined based on the sounding reference signal. At 815, the method may include entering into an autonomous timing advance mode in response to receiving the service link timing advance parameters. At 820, the method may include while in the autonomous timing advance mode, determining a timing advance value at a given time for uplink transmission based on the service link timing advance parameters and the system information. At 825, the method may include performing uplink data transmission to the network element based on the timing advance value.

According to certain example embodiments, the method may also include disabling the autonomous mode when the service link timing advance parameters are not received from the network element. According to some example embodiments, the system information may include a high altitude platform system angular speed, a time reference point, and parameters for a feeder link timing advance calculation. According to other example embodiments, the transmission of the sounding reference signal may include applying a feeder link timing advance. According to further example embodiments, the method may include, while in the autonomous timing advance mode, setting an uplink inactivity timer to ensure the validity of the service link timing advance parameters.

In certain example embodiments, the uplink inactivity timer may begin at the end of the uplink transmission. In some example embodiments, upon expiration of the uplink inactivity timer, the method may further include transmitting a scheduling request for sounding reference signal transmissions to the network element. In other example embodiments, the scheduling request may trigger the network element to check if the service link timing advance parameters are still valid. In further example embodiments, when a preconfigured uplink resource is configured in the network element, the method may further include transmitting the uplink data on the preconfigured uplink resource after wake-up from a radio resource control idle state based on the uplink inactivity timer.

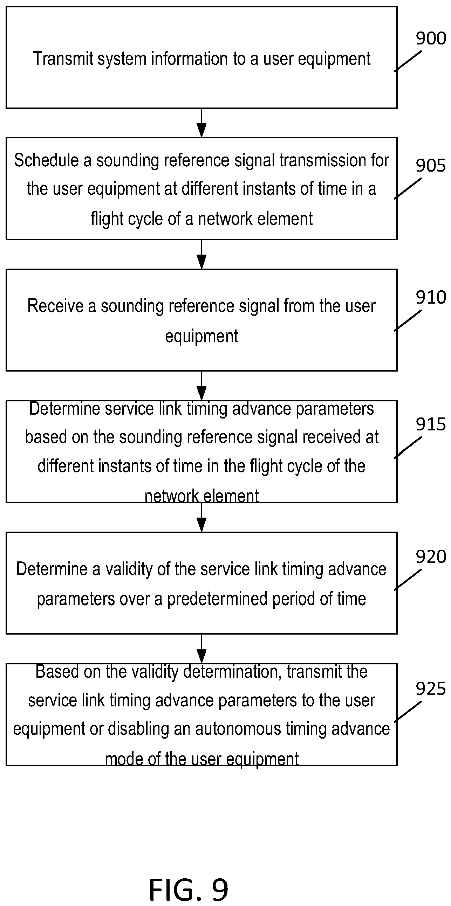

FIG. 9 illustrates an example flow diagram of another method, according to certain example embodiments. In an example embodiment, the method of FIG. 9 may be performed by a network entity, or a group of multiple network elements in a 3GPP system, such as LTE or 5G-NR. For instance, in an example embodiment, the method of FIG. 9 may be performed by a gNB, network node, target cell, or target node similar to one of apparatuses 10 or 20 illustrated in FIGs. 10(a) and 10(b).

According to certain example embodiments, the method of FIG. 9 may include, at 900, transmitting system information to a user equipment. At 905, the method may include scheduling a sounding reference signal transmission for the user equipment at different instants of time in a flight cycle of a network element. At 910, the method may include receiving a sounding reference signal from the user equipment. At 915, the method may include determining service link timing advance parameters based on the sounding reference signal received at different instants of time in the flight cycle of the network element. At 920, the method may include determining a validity of the service link timing advance parameters over a predetermined period of time. At 925, the method may include, based on the validity determination, transmitting the timing advance parameters to the user equipment or disabling an autonomous timing advance mode of the user equipment.

According to certain example embodiments, the service link timing advance parameters may be transmitted to the user equipment when the service link timing advance parameters are determined to be valid, and the autonomous timing advance mode of the user equipment may be disabled when the timing advanced parameters are determined to be invalid. According to some example embodiments, the system information may include a high altitude platform system angular speed, a time reference point, and parameters for a feeder link timing advance calculation. According to other example embodiments, the method may further include instructing the user equipment that the autonomous timing advance mode can be used.

In certain example embodiments, the method may also include monitoring an uplink timing error while the user equipment is operating in the autonomous timing advance mode. In some example embodiments, when the uplink timing error exceeds a predetermined limit, the method may further include scheduling sounding reference signal transmissions for the user equipment, and re-determining the service link timing advance parameters for the user equipment.

FIG. 10(a) illustrates an apparatus 10 according to certain example embodiments. In certain example embodiments, apparatus 10 may be an element in a communications network or associated with such a network, such as a UE, mobile station, mobile device, stationary device, or other device. It should be noted that one of ordinary skill in the art would understand that apparatus 10 may include components or features not shown in FIG. 10(a).

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 10(a).

As illustrated in the example of FIG. 10(a), apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 10(a), multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-8.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-8.

In some example embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to receive system information from a network element. Apparatus 10 may also be controlled by memory 14 and processor 12 to transmit a sounding reference signal in response to receiving the system information. Apparatus 10 may further be controlled by memory 14 and processor 12 to receive service link timing advance parameters that the network element determined based on the sounding reference signal. In addition, apparatus 10 may be controlled by memory 14 and processor 12 to enter into an autonomous timing advance mode in response to receiving the service link timing advance parameters. Further, apparatus 10 may be controlled by memory 14 and processor 12 to, while in the autonomous timing advance mode, determine a timing advance value at a given time for uplink transmission based on the service link timing advance parameters and the system information. Apparatus 10 may also be controlled by memory 14 and processor 12 to perform uplink data transmission to the network element based on the timing advance value.

FIG. 10(b) illustrates an apparatus 20 according to certain example embodiments. In certain example embodiments, the apparatus 20 may be a node or element in a communications network or associated with such a network, such as a base station, a Node B, an evolved Node B (eNB), 5G Node B or access point, next generation Node B (NG-NB or gNB), source node/cell, target node/cell, and/or WLAN access point, associated with a radio access network (RAN), such as an LTE network, 5G or NR. It should be noted that one of ordinary skill in the art would understand that apparatus 20 may include components or features not shown in FIG. 10(b).

As illustrated in the example of FIG. 10(b), apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 10(b), multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGs. 1-7 and 9.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGs. 1-7 and 9.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to transmit system information to a user equipment. Apparatus 20 may also be controlled by memory 24 and processor 22 to schedule a sounding reference signal transmission for the user equipment at different instants of time in a flight cycle of the apparatus. Apparatus 20 may further be controlled by memory 24 and processor 22 to receive a sounding reference signal from the user equipment. In addition, apparatus 20 may be controlled by memory 24 and processor 22 to determine service link timing advance parameters based on the sounding reference signal received at different instants of time in the flight cycle of the apparatus. Further, apparatus 20 may be controlled by memory 24 and processor 22 to determine a validity of the service link timing advance parameters over a predetermined period of time. Apparatus 20 may also be controlled by memory 24 and processor 22 to, based on the validity determination, transmit the service link timing advance parameters to the user equipment or disabling an autonomous timing advance mode of the user equipment.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for receiving system information from a network element. The apparatus may also include means for transmitting a sounding reference signal in response to receiving the system information. The apparatus may further include means for receiving service link timing advance parameters that the network element determined based on the sounding reference signal. In addition, the apparatus may include means for entering into an autonomous timing advance mode in response to receiving the service link timing advance parameters. Further, the apparatus may include means for, while in the autonomous timing advance mode, determining a timing advance value at a given time for uplink transmission based on the service link timing advance parameters and the system information. The apparatus may also include means for performing uplink data transmission to the network element based on the timing advance value

Certain example embodiments may also be directed to an apparatus that includes means for transmitting system information to a user equipment. The apparatus may also include means for scheduling a sounding reference signal transmission for the user equipment at different instants of time in a flight cycle of the apparatus. The apparatus may further include means for receiving a sounding reference signal from the user equipment. In addition, the apparatus may include means for determining service link timing advance parameters based on the sounding reference signal received at different instants of time in the flight cycle of the apparatus. Further, the apparatus may include means for determining a validity of the service link timing advance parameters over a predetermined period of time. The apparatus may also include means for, based on the validity determination, transmitting the service link timing advance parameters to the user equipment or disabling an autonomous timing advance mode of the user equipment.

Certain example embodiments described herein provide several technical improvements, enhancements, and /or advantages. In some example embodiments, it may be possible to allow timing adjustment for UL transmission to be carried out autonomously by the UE in HAPS coverage area with the assistant information provided by the network. In other example embodiments, the TA parameters may allow the UE to autonomously calculate its TA for UL transmission without the gNB continuously sending TA commands. Frequent TA commands in the RRC connected state can therefore be avoided. Certain example embodiments may also be applied to IoT devices to reduce the connection time by enabling them to directly transmit UL data after wake-up from a dormant state without going through the random access procedure to acquire TA.

Additionally, signal propagation delay may vary when the UE is connected with HAPS due to HAPS movement. Thus, certain example embodiments may address this issue by enabling precise timing synchronization in the UL. In doing so, it may be possible to obtain a more reliable radio link and eliminate TA control overhead, as well as reduce network access time for IoT devices.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the invention as discussed above may be practiced with procedures in a different order, and/or with hardware elements in configurations which are different than those which are disclosed. Therefore, although the invention has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

Partial Glossary:

| 3GPP | 3rd Generation Partnership Project |
| 5G | 5th Generation |
| 5GCN | 5G Core Network |
| ACK | Acknowledge |
| BS | Base Station |

| | |
|---|---|
| CP | Cyclic Prefix |
| DL | Downlink |
| DRX | Discontinuous Reception |
| eNB | Enhanced Node B |
| gNB | 5G or Next Generation NodeB |
| GW | Gateway Station |
| HAPS | High Altitude Platform Station |
| IoT | Internet of Things |
| LTE | Long Term Evolution |
| MAC | Medium Access Control |
| MTC | Machine Type Communication |
| NB-IoT | Narrow Band IoT |
| NR | New Radio |
| OFDM | Orthogonal Frequency Division Multiplexing |
| PHY | Physical Layer |
| PUR | Preconfigured Uplink Resources |
| RRC | Radio Resource Control |
| RTT | Round-Trip Time |
| SCS | Sub-Carrier Spacing |
| SIB | System Information Block |
| SRS | Sounding Reference Signal |
| TA | Timing Advance |
| UE | User Equipment |
| UL | Uplink |

**Claims**

1. A method, comprising:

   receiving system information from a network element;
   transmitting a sounding reference signal in response to receiving the system information;
   receiving timing advance parameters from the network element determined based on the sounding reference signal;
   entering into an autonomous timing advance mode in response to receiving the timing advance parameters;
   while in the autonomous timing advance mode, determining a timing advance value at a given time for uplink transmission based on the timing advance parameters; and
   performing uplink data transmission to the network element based on the timing advance value.

2. The method according to claim 1, further comprising:
   refraining from entering the autonomous mode when the timing advance parameters are not received from the network element.

3. The method according to claims 1 or 2, wherein the system information comprises a high altitude platform system angular speed, a time reference point, and parameters for a feeder link timing advance calculation.

4. The method according to claim 3, wherein the transmission of the sounding reference signal comprises applying the feeder link timing advance.

5. A method, comprising:

   transmitting system information to a user equipment;
   scheduling a sounding reference signal transmission for the user equipment at different instants of time in a flight cycle of a network element;
   receiving a sounding reference signal from the user equipment;
   determining timing advance parameters at different instants of time in the flight cycle of the network element based on the sounding reference signal;
   determining a validity of the timing advance parameters over a predetermined period of time; and

based on the validity determination, transmitting the timing advance parameters to the user equipment or disallowing the user equipment to enter the autonomous mode .

6. The method according to claim 5,

   wherein the timing advance parameters are transmitted to the user equipment when the timing advance parameters are determined to be valid, and
   wherein the autonomous timing advance mode of the user equipment is disallowed when the timing advanced parameters are determined to be invalid.

7. The method according to claims 5 or 6, wherein the system information comprises a high altitude platform system angular speed, a time reference point, and parameters for a feeder link timing advance calculation.

8. The method according to any of claims 5-7, further comprising:
   instructing the user equipment that the autonomous timing advance mode can be used.

9. An apparatus, comprising:

   means for receiving system information from a network element;
   means for transmitting a sounding reference signal in response to receiving the system information;
   means for receiving timing advance parameters from the network element determined based on the sounding reference signal;
   means for entering into an autonomous timing advance mode in response to receiving the timing advance parameters;
   means for, while in the autonomous timing advance mode, determining a timing advance value at a given time for uplink transmission based on the timing advance parameters; and
   means for performing uplink data transmission to the network element based on the timing advance value.

10. The apparatus according to claim 9, further comprising:
    means for refraining from entering the autonomous mode when the timing advance parameters are not received from the network element.

11. The apparatus according to claims 9 or 10, wherein the system information comprises a high altitude platform system angular speed, a time reference point, and parameters for a feeder link timing advance calculation.

12. An apparatus, comprising:

    means for transmitting system information to a user equipment;
    means for scheduling a sounding reference signal transmission for the user equipment at different instants of time in a flight cycle of the apparatus;
    means for receiving a sounding reference signal from the user equipment;
    means for determining timing advance parameters at different instants of time in the flight cycle of the apparatus based on the sounding reference signal;
    means for determining a validity of the timing advance parameters over a predetermined period of time; and
    means for, based on the validity determination, transmitting the timing advance parameters to the user equipment or disallowing the user equipment to enter the autonomous mode.

13. The apparatus according to claim 12,

    wherein the timing advance parameters are transmitted to the user equipment when the timing advance parameters are determined to be valid, and
    wherein the autonomous timing advance mode of the user equipment is disallowed when the timing advanced parameters are determined to be invalid.

14. The apparatus according to claims 12 or 13, wherein the system information comprises a high altitude platform system angular speed, a time reference point, and parameters for a feeder link timing advance calculation.

15. A non-transitory computer readable medium comprising program instructions which, when the program is executed by an apparatus, cause the apparatus to carry out the method according to any of claims 1-8.

**FIG. 1**

FIG. 2

FIG. 3

FIG. 4

gNB                       UE

1) System info $\{m(t{=}0), \omega, c_0, c_1\}$

Random Access Procedure

2) Schedule SRS

3) SRS

4) Determine TA parameters

5) TA parameters $\{a_0, a_1, b_1\}$

6) TA autonomous mode start

7) UL data transmission in autonomous TA mode

8) Monitor timing error

FIG. 5

EP 4 142 182 A1

FIG. 6

22

FIG. 7

Receive system information from a network element — 800

↓

Transmit a sounding reference signal in response to receiving the system information — 805

↓

Receive service link timing advance parameters that the network element determined based on the sounding reference signal — 810

↓

Enter into an autonomous timing advance mode in response to receiving the service link timing advance parameters — 815

↓

While in the autonomous timing advance mode, determine a timing advance value at a given time for uplink transmission based on the service link timing advance parameters and the system information — 820

↓

Perform uplink data transmission to the network element based on the timing advance value — 825

FIG. 8

Transmit system information to a user equipment    900

Schedule a sounding reference signal transmission for the user equipment at different instants of time in a flight cycle of a network element    905

Receive a sounding reference signal from the user equipment    910

Determine service link timing advance parameters based on the sounding reference signal received at different instants of time in the flight cycle of the network element    915

Determine a validity of the service link timing advance parameters over a predetermined period of time    920

Based on the validity determination, transmit the service link timing advance parameters to the user equipment or disabling an autonomous timing advance mode of the user equipment    925

FIG. 9

15

14

Memory

12

Processor

18

Transceiver

10

FIG. 10(a)

70

25

24

Memory

22

Processor

28

Transceiver

20

FIG. 10(b)

Europäisches
Patentamt

European
Patent Office

Office européen
des brevets

## EUROPEAN SEARCH REPORT

Application Number

**EP 22 19 1605**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/351661 A1 (BRIGGS ELLIOT S [US] ET AL) 6 December 2018 (2018-12-06) | 1,9,15 | INV. H04B7/185 H04W56/00 |
| A | * paragraphs [0063] - [0065] * | 2-8, 10-14 | |
| | ----- | | |
| A | CAICT: "Considerations on Enhancements on UL Time Synchronization in NTN", 3GPP DRAFT; R1-2107890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210816 - 20210827 6 August 2021 (2021-08-06), XP052033685, Retrieved from the Internet: URL:https://ftp.3gpp.org/tsg_ran/WG1_RL1/TSGR1_106-e/Docs/R1-2107890.zip R1-2107890.docx [retrieved on 2021-08-06] * paragraph [02.1] * | 1-15 | |
| | ----- | | |
| | -/-- | | |

TECHNICAL FIELDS SEARCHED (IPC)

H04B
H04W

The present search report has been drawn up for all claims

| Place of search | Date of completion of the search | Examiner |
|---|---|---|
| The Hague | 2 January 2023 | Dejonghe, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

3

Europäisches
Patentamt

European
Patent Office

Office européen
des brevets

# EUROPEAN SEARCH REPORT

Application Number

EP 22 19 1605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUALCOMM INCORPORATED: "RACH Procedure and UL Timing Control for NTN", 3GPP DRAFT; R1-1912956, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20191118 - 20191122 9 November 2019 (2019-11-09), XP051823718, Retrieved from the Internet: URL:https://ftp.3gpp.org/tsg_ran/WG1_RL1/T SGR1_99/Docs/R1-1912956.zip R1-1912956 RACH Procedure and UL Timing Control for NTN.docx [retrieved on 2019-11-09] * paragraph [0003] * * paragraph [0004] * ----- | 1-15 | |
| A | LENOVO ET AL: "Time and frequency synchronization for IoT NTN", 3GPP DRAFT; R1-2107942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210816 - 20210827 7 August 2021 (2021-08-07), XP052038712, Retrieved from the Internet: URL:https://ftp.3gpp.org/tsg_ran/WG1_RL1/T SGR1_106-e/Docs/R1-2107942.zip R1-2107942.docx [retrieved on 2021-08-07] * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 2 January 2023 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 1605

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2023

| Patent document cited in search report | Publication date | Patent family member(s) | Publication date |
|---|---|---|---|
| US 2018351661 A1 | 06-12-2018 | NONE | |

For more details about this annex : see Official Journal of the European Patent Office, No. 12/82